Europäisches Patentamt

European Patent Office

Office européen des brevets

(11) Publication number: 0 509 604 A1

# EUROPEAN PATENT APPLICATION

(21) Application number: 92201074.9

(22) Date of filing: 14.04.92

(51) Int. Cl.5: F16D 25/04

(30) Priority: 18.04.91 NL 9100678

(43) Date of publication of application:
21.10.92 Bulletin 92/43

(84) Designated Contracting States:
BE DE FR GB LU NL

(71) Applicant: KUIKEN N.V.
Randweg 31
NL-8304 AS Emmeloord(NL)

(72) Inventor: Kuiken, Hendrik

Min. Lelysingel 1
NL-8302 BR Emmeloord(NL)
Inventor: Schouten, Matheus Jacobus
Wilhelmus
Dennenveld 10
NL-5752 AD Deurne(NL)

(74) Representative: de Bruijn, Leendert C. et al
Nederlandsch Octrooibureau
Scheveningseweg 82 P.O. Box 29720
NL-2502 LS Den Haag(NL)

(54) Coupling device.

(57) A device for coupling two rotary objects, such as a driving shaft and a driven shaft, has two tubular rotary elements (1,2) which are at least partially telescoped and are provided with means (3,4) for fixing to one of the rotary objects in each case, and also with means (6) for changing their cross-sectional shape by producing elastic deformations of their tubular wall, while the rotary elements over the area in which they are telescoped can be changed into a first shape in which they can rotate relative to each other, and a second shape in which they are not round, in such a way that, owing to their corresponding shapes, they are not rotatable relative to each other. A friction element (10) is preferably provided between the two rotary elements, which friction element permits a frictional interaction between the two rotary elements when they pass from their first shape to their second shape, and vice versa.

fig-1a

EP 0 509 604 A1

The invention relates to a device for coupling two rotary objects, such as a driving shaft and a driven shaft. Such coupling devices are generally known. A special type of coupling is used in four-wheel drive vehicles. In these four-wheel drive vehicles the two drive shafts are connected by a universally jointed shaft. In order to permit changing over from a two-wheel drive to a four-wheel drive and vice versa in such a vehicle, a coupling is provided in line with said universally jointed shaft. These couplings (clutch coupling) are generally of a simple type with teeth meshing with each other. For that reason, the vehicle must first be stopped before the coupling can be switched on or off. This is a disadvantage, in particular in vehicles such as earthmoving machines and the like, which are often used in different conditions, and in which the changeover between two-wheel and four-wheel drive is made frequently.

The object of the invention is therefore to provide a coupling which, on the one hand, takes up little space, in such a way that it can easily be fitted in a universally jointed shaft connecting two drive shafts and which, on the other hand, provides the possibility of performing switching on and off operations while the universally jointed shaft is in operation, and can also serve to produce the shifting function of the universally jointed shaft.

This is achieved through the fact that the coupling device has two tubular rotary elements which at least partially run into each other and are provided with means for fixing to one of the rotary objects in each case, and also with means for changing their cross-section shape by producing elastic deformations of their tubular wall, while the rotary elements over the area in which they run into each other can be changed into a first shape in which they can rotate relative to each other, and a second shape in which they are not round, in such a way that, owing to their corresponding shapes, they are not rotatable relative to each other, but can be shifted in the lengthwise direction.

The coupling device according to the invention takes up little space, and is of the same order of magnitude as the diameter of the universally jointed shaft. The interaction through corresponding, non-round shapes means that it also produces a very reliable coupling action in which any form of slippage is out of the question, A further advantage which can be mentioned is that such a coupling, which makes use of elastic deformations of the parts to be coupled, has very few moving parts, so that wear will be minimal.

A friction element is preferably provided between the two rotary elements, which friction element permits a frictional interaction between the two rotary elements during shapes of the rotary elements which occur when they pass from their first shape to their second shape, and vice versa.

If one of the elements now becomes a little elastically deformed, a frictional interaction will occur between the two rotary elements. This is initially slipping but, given the presence of the friction element, that is no problem. On further deformation of the rotary elements the friction forces will increase, in such a way that the rotary element to be driven in the end rotates at the same speed as the driving rotary element. The deformed state of the rotary elements here gradually becomes such that the interaction through friction passes into an interaction through corresponding shapes. In the latter state the rotary elements cannot be rotated relative to each other.

Both rotary elements can be supported relative to each other in a suitable manner by rotary bearings provided in each case on either side of the friction elements. These bearings themselves, and the parts of the rotary elements connecting to them, remain undeformable. Cross-section deformations are, however, possible in the part of the rotary elements and the friction element lying between the rotary bearings. Even with a shaped condition of the rotary elements which is such that interaction through corresponding, non-round shapes occurs, the deformations are still limited in such a way that the rotary bearings are not influenced by them. One rotary element or both rotary elements can, however, be shifted in its/their lengthwise direction relative to the bearings, in order to permit length adjustments of the coupling during operation.

The production of deformations of the rotary elements in such a way that they acquire a non-round cross-section shape can be carried out in different ways. However, according to the invention this is preferably achieved through the fact that the thickness of the tubular wall of at least one of the rotary elements is not constant in the peripheral direction. The deformations will be greatest at the position of the smallest thickness of the tubular wall, with the result that a non-round shape can already be ensured.

Good results are obtained if the tubular wall of at least one of the rotary elements has a smaller wall thickness at two points lying diametrically opposite each other. A deformation with a plane of symmetry coinciding with the axis can thus be produced, in such a way that a balanced distribution of the friction forces can be ensured.

Such a device with rotary elements with non-constant wall thickness can be carried out in different ways.

According to a first possibility, at least the outer tubular rotary element has a non-constant wall thickness in the peripheral direction, and the rotary element is provided with a casing into which a pressure medium can be pressed, for the application of an inward radial pressure on the rotary element, in such a way that by means of said radial pressure its relatively thin wall parts can be curved more greatly than its relatively thick wall parts, for the production of a non-round shape. A greater or lesser deviation from the round shape of the outer tubular element can be provided by pressing in the pressure medium with greater or lesser pressure.

In the same way, according to a second possibility, at least the inner tubular rotary element can have a non-constant wall thickness in the peripheral direction, while said rotary element can be provided with an expansion member into which a pressure medium can be pressed, for the application of an outward radial pressure in the rotary element, in such a way that by means of said radial pressure its relatively thin wall parts can be curved more greatly than its relatively thick wall parts, for the production of a non-round shape.

Of course, both the inner and the outer tubular rotary element can have a non-constant wall thickness, and can be controllable by their own expansion member.

The expansion member provided on the outer tubular rotary element can be a casing which is not rotatable and, by means of rotary seals provided on its end, is sealed off relative to the outer tubular rotary element. Such a casing can be connected in a simple manner to a hydraulic circuit.

As an alternative, such a casing can be fixed to the outer tubular rotary element, and connected to a source with pressure medium by means of a non-rotating pressure chamber surrounding the outer tubular rotary element and interacting therewith by means of rotary seals. This pressure chamber is in turn connected to the source with pressure medium.

In the case of the inner tubular rotary element the expansion member can be connected to a source with pressure medium by means of a non-rotating pressure chamber surrounding said inner tubular rotary element and interacting therewith by means of rotary seals. This pressure chamber too can in turn be connected again to a source with pressure medium.

In the latter case the inner tubular element preferably has an expansion member which on expansion can press said tubular element outwards at two points lying diametrically opposite each other. This promotes the occurrence of the non-round shape of the inner tubular element.

For this purpose, the expansion member can have, for example, a thin-walled, constricted cross-section. When a pressure medium is fed into such an expansion member the constricted parts are moved apart, in such a way that the parts of the cross-section between the constricted parts also move apart in the direction at right angles to said movement. The measurement of the cross-section in the latter direction initially increases faster than the measurement in the former direction. In this way the inner tubular rotary element can be pressed outwards at two points lying diametrically opposite each other in said latter direction.

The inner tubular element can also have a permanently non-rotationally symmetrical cross-section. As soon as the outer rotary element is sufficiently deformed, a very reliable coupling by means of corresponding shapes exists in this embodiment.

The invention will be explained in greater detail below with reference to three examples of embodiments shown in the figures.

Figures 1a - 1c show a first embodiment of the device according to the invention.

Figures 2a - 2c show a second embodiment.

Figures 3a - 3c show a third embodiment.

Figure 4 shows a variant.

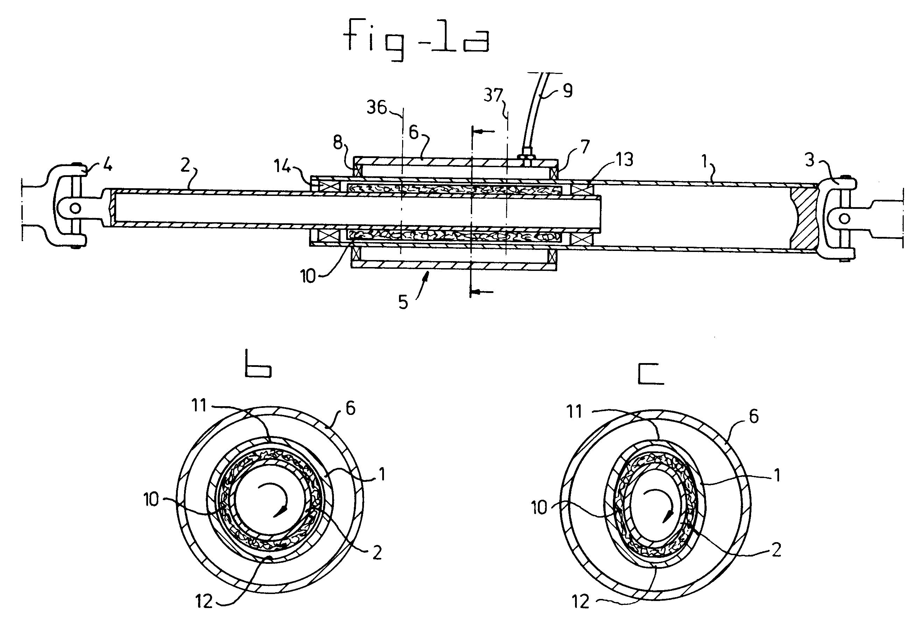

The embodiment shown in Figures 1a - 1c shows a universally jointed shaft containing two concentric tubes, i.e. an outer tube 1 and an inner tube 2. The tubes 1 and 2 are provided at their ends with two universal couplings 3, 4 which are known per se, and which in turn are connected, for example, to the ingoing drive shaft of a four-wheel drive vehicle and at the other side to the drive part of the diesel engine. A coupling device according to the invention, indicated in its entirety by 5, is shown in the centre of the universally jointed shaft. In this embodiment the coupling device has a casing 6 which is sealed in a liquidtight manner relative to the outside wall of the tube 1 by means of rotary seals 7, 8. An oil pressure line 9 is connected to the casing 6, by means of which line the space between casing 6, the rotary seals 7, 8 and the tube 1 can be placed under a radially inward directed excess pressure.

All this is shown in cross-section in Figure 1b. In Figures 1a, 1b and 1c it can also be seen that a friction element 10 is provided between the two tubes 1, 2.

The two tube halves 1, 2 shown in cross-section in Figure 1b are not coupled together, in other words, the two can rotate at a different angular speed. However, as soon as an excess pressure is now produced in the casing 6, the outer tube will assume a non-round shape. This is caused by the fact that its wall thickness, viewed in the peripheral direction, is not constant. At the places indicated by 11 and 12 said tube 1 has a relatively small wall thickness, and between them a relatively great wall thickness. As a result, when excess pressure is applied in the casing 6 the wall parts 11, 12 will be curved more greatly than the relatively thick wall parts of tube 1. This results in it assuming the shape shown in Figure 1c. In the shape shown in Figure 1c the tubes 1, 2 are coupled to each other so that they cannot rotate, due to the corresponding non-round shapes which the tubes 1, 2 have assumed with the friction element 10 between them.

Before the situation shown in Figure 1c is reached, the tube 1 will assume a shape with smaller deformations. These deformations are initially so small that tubes 1 and 2 interact frictionally, in such a way that mutual rotations are possible, but one tube can drive the other. When the deformations increase, this driving effect increases, and the angular speeds of tubes 1 and 2 become closer and closer. In the end, they have become equal, and a non-rotatable coupling is achieved, due to the corresponding non-round shapes such as those shown in Figure 1c. The inner tube 2 is also pressed into a non-round shape in the process, in view of the pressure by the outer tube 1 on two points lying diametrically opposite each other.

It is pointed out that the deformation of tube 1 and 2 shown in Figure 1c is shown exaggerated. A non-rotatable coupling is already obtained with considerably smaller deformations. By allowing the wall thickness reduction from position 36 to 37, the deformations at the position of the rotary seals 7, 8 fitted on the tube 1 will be minimal, and will not thereby affect the sealing.

The same applies to the bearings 13, 14 with which the inner tube 2 is supported in the outer tube 1.

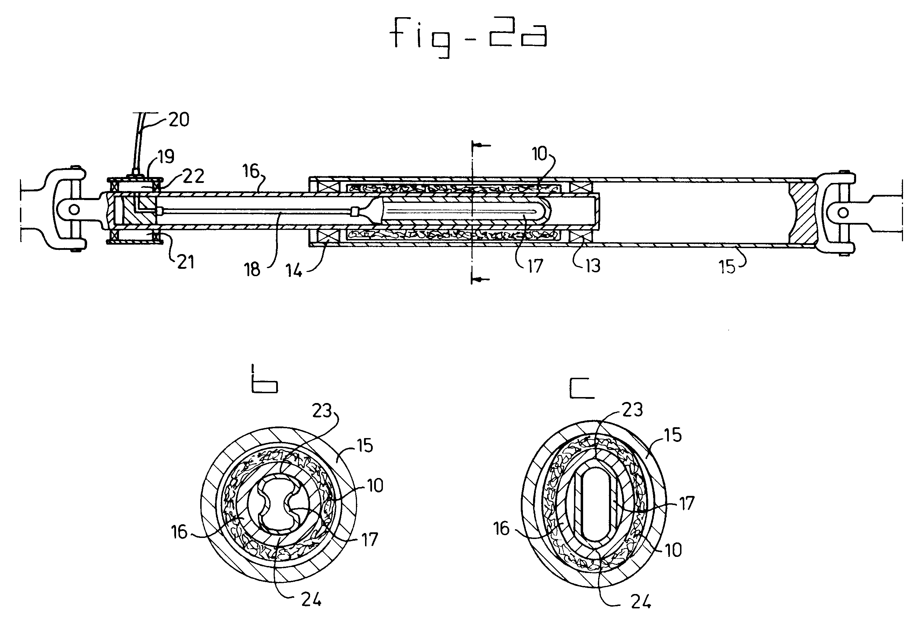

In the embodiment shown in Figures 2a - 2c the outer tube 15 and the inner tube 16 are also supported relative to each other by bearings 13 and 14. Here too, a friction element 10 is provided between the two tubes. An expansion member 17 is fitted in the inner tube 16, which member, by means of a hydraulic line 18 and a chamber 19 provided so that it cannot rotate relative to the inner tube 16, can be supplied with a hydraulic medium through tube 20. Chamber 19 is in turn sealed off relative to the inner tube 16 by rotary seals 21, 22.

As shown in Figure 2b, the expansion member 17 itself is a non-round shape. As soon as a medium is pressed into the expansion member, it will press the inner tubular element 16 outwards at two points lying diametrically opposite each other, indicated by 23 and 24. As a result, the inner tube 16, by means of the friction element 10, is brought into interaction with the outer tube 15. While the two tubes 15, 16 initially interact frictionally with each other, in the end the situation shown in Figure 2c is reached, in which they interact non-rotationally by means of corresponding shapes.

As stated, the expansion member 17 is a non-round shape, and therefore also forces the inner tube 16 and the outer tube 17 into a non-round shape.

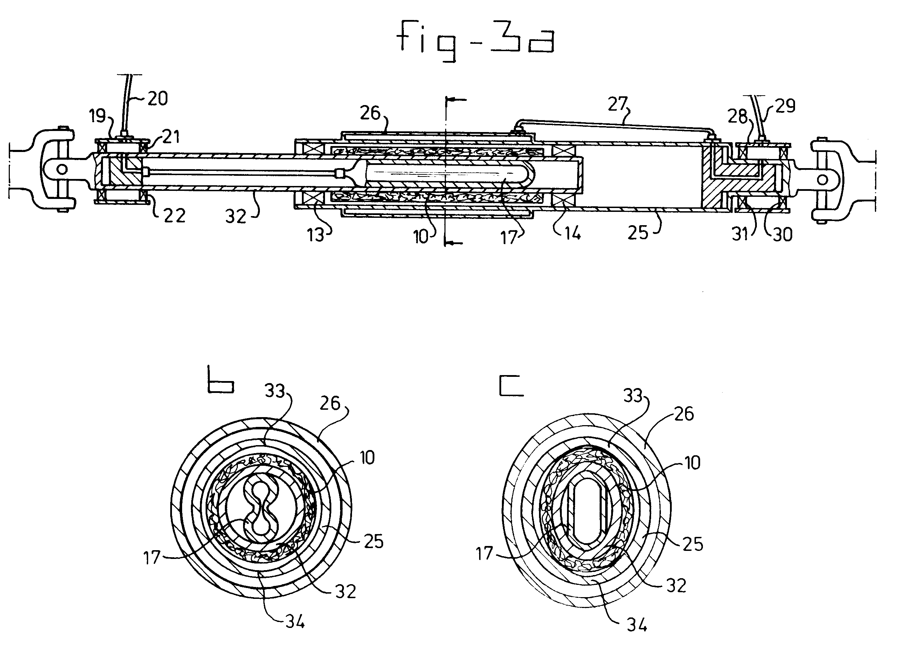

In the embodiment shown in Figures 3a to 3c the two possibilities discussed above are combined. However, in this case a fixed casing 26 is provided around the outer tube 25, which casing can be supplied with a pressure medium through line 29 by means of hydraulic line 27 and the pressure chamber 28 provided which cannot rotate relative to the outer tube 25. Here again, the chamber 18 is sealed off relative to the outer tube 25 by means of rotary seals 30, 31. An expansion member 17 is again used in the inner tube 32, corresponding to the embodiment of Figure 2. A friction element 17 and supporting bearings 14 and are also provided.

The outer tube has at 33 and 34 wall parts of relatively small thickness. This means that on the application of an excess pressure in the casing 26 the outer tube can be made a non-round shape. The casing 26, which is fixed on the outer tube 26, may deform in a corresponding manner in the process.

The inner tube 25 can be made non-round, in the same way as the inner tube 16 in Figure 2, by means of the expansion member 17.

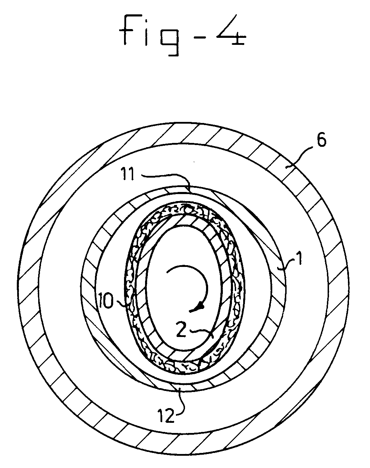

In the variant of Figure 1b shown in Figure 4, the inner tube 2 is a permanent non-rotationally symmetrical shape. Here again, when an excess pressure is applied in the space inside the casing 6, tube 1 gradually comes into contact with the friction element 10. If there is sufficient deformation of tube 1, through corresponding shapes it will in the end interact in a non-rotating manner with tube 2, as shown in Figure 1c.

## Claims

1. Device for coupling two rotary objects, such as a driving shaft and a driven shaft, <u>characterised in that</u> it has at least two tubular <u>rotary elements</u> which at least partially run into each other and are provided with means for fixing to one of the rotary objects in each case, and also with means for changing their cross-section shape by producing elastic deformations of their tubular wall, while the rotary elements over the area in which they run into each other can be changed into a first shape in which they can rotate relative to each other, and a second shape in which they are not round, in such a way that, owing to their corresponding shapes, they are not rotatable relative to each other.

2. Device according to Claim 1, in which a friction element is provided between the two rotary elements, which friction element permits a frictional interaction between the two rotary elements during shapes of the rotary elements which occur when they pass from their first shape to their second shape, and vice versa.

3. Device according to Claim 2, in which the rotary elements are supported relative to each other by rotary bearings provided in each case on either side of the friction elements.

4. Device according to Claim 2 or 3, in which the thickness of the tubular wall of at least one of the rotary elements is not constant in the peripheral direction.

5. Device according to Claim 4, in which the tubular wall of at least one of the rotary elements has a smaller wall thickness at two points lying diametrically opposite each other.

6. Device according to Claim 4 or 5, in which at least the outer tubular rotary element has a non-constant wall thickness in the peripheral direction, which rotary element is provided with a casing into which a pressure medium can be pressed, for the application of an inward radial pressure on said rotary element, in such a way that by means of said radial pressure its relatively thin wall parts can be curved more greatly than its relatively thick wall parts, for the production of a non-round shape.

7. Device according to any of Claims 4 - 6, in which at least the inner tubular rotary element has a non-constant wall thickness in the peripheral direction, which rotary element can be provided with an expansion member into which a pressure medium can be pressed, for the application of an outward radial pressure in said rotary element, in such a way that by means of said radial pressure its relatively thin wall parts can be curved more greatly than its relatively thick wall parts, for the production of a non-round shape.

8. Device according to Claim 6, or 6 and 7, in which the casing is not rotatable, and by means of rotary seals provided on its ends is sealed off relative to the outer tubular rotary element.

9. Device according to Claim 6, or 6 and 7, in which the casing is fixed to the outer tubular rotary element, and is connected to a source with pressure medium by means of a non-rotating pressure chamber surrounding the outer tubular rotary element and interacting therewith by means of rotary seals.

10. Device according to Claim 7, or 8, 9 and 7, in which the expansion member is connected to a source with pressure medium by means of a non-rotating pressure chamber surrounding the inner tubular rotary element and interacting therewith by means of rotary seals.

11. Device according to any of Claims 2 - 10, in which the inner tubular element has an expansion member which on expansion can press said tubular element outwards at two points lying diametrically opposite each other.

12. Device according to Claim 11, in which the expansion member has a thin-walled, constricted cross-section.

13. Device according to any of Claims 2 - 6, or 8, 9 in conjunction with Claim 6, in which the inner tubular element has a permanently non-rotationally symmetrical cross-section.

14. Device according to any of Claims 2 - 13, in which the driving shaft can be shifted in the axial direction relative to the driven shaft.

fig-1a

# fig-2a

EP 0 509 604 A1

# fig-3a

EP 0 509 604 A1

Fig - 4

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5 ) |
|---|---|---|---|
| X | DE-U-8 702 502 (FRITSCHI) | 1-5,7 | F16D25/04 |
| Y | * the whole document * | 10 | |
| Y | US-A-2 600 102 (FAWICK) | 10 | |
| | * the whole document * | | |
| X | DE-B-1 004 054 (STIHL) | 1 | |
| Y | * the whole document * | 2-6,9,14 | |
| Y | FR-A-2 455 213 (MOLINS) | 2-6,9,14 | |
| | * the whole document * | | |
| X | GB-A-1 499 466 (NISHIMURA) | 1,14 | |
| Y | * the whole document * | 2,4,5 | |
| Y | DE-B-1 223 201 (FAWICK) | 2,4,5 | |
| A | * the whole document * | 9 | |
| X | WO-A-8 504 223 (HORTON) | 1,14 | |
| A | * the whole document * | 4,5 | |
| X | FR-A-826 595 (GENERAL TIRE) | 1,14 | TECHNICAL FIELDS SEARCHED (Int. Cl.5 ) |
| A | * page 4, column 78 - page 5, column 6; figures 6,7 * | 4,13 | F16D |
| X | FR-A-1 254 761 (BADISCHE ANALIN) | 1 | |
| | * page 2; figures 2,3 * | | |

The present search report has been drawn up for all claims

| Place of search | Date of completion of the search | Examiner |
|---|---|---|
| THE HAGUE | 17 JUNE 1992 | BALDWIN D. R. |